Europäisches Patentamt

European Patent Office

Office européen des brevets

(19)

(11) Veröffentlichungsnummer: **0 307 694 B1**

(12) # EUROPÄISCHE PATENTSCHRIFT

(45) Veröffentlichungstag der Patentschrift: **04.11.92**

(21) Anmeldenummer: **88113983.6**

(22) Anmeldetag: **26.08.88**

(51) Int. Cl.⁵: **A47G 27/04**, B32B 27/08, D06N 7/00, E04F 15/18, E04F 21/22

(54) **Verfahren zur Herstellung eines flexiblen, selbstklebenden Fussbodenbelages, insbesondere für Flugzeuge.**

(30) Priorität: **15.09.87 DE 3730882**

(43) Veröffentlichungstag der Anmeldung:
**22.03.89 Patentblatt 89/12**

(45) Bekanntmachung des Hinweises auf die Patenterteilung:
**04.11.92 Patentblatt 92/45**

(84) Benannte Vertragsstaaten:
**CH DE FR GB IT LI NL**

(56) Entgegenhaltungen:
**EP-A- 0 104 305**
**DE-A- 952 921**
**DE-A- 1 784 300**
**DE-A- 3 304 232**

(73) Patentinhaber: **METZELER Automotive Profiles GmbH**
**Bregenzer Strasse 133**
**W-8990 Lindau / Bodensee(DE)**

(72) Erfinder: **Kral, Hans-Peter**
**Freiherr-vom-Stein-Strasse 2**
**W-6946 Gorxheimertal-Trösel(DE)**

(74) Vertreter: **Michelis, Theodor, Dipl.-Ing.**
**Seibert + Michelis Rechtsanwälte und Patentanwälte Tattenbachstrasse 9**
**W-8000 München 22(DE)**

Anmerkung: Innerhalb von neun Monaten nach der Bekanntmachung des Hinweises auf die Erteilung des europäischen Patents kann jedermann beim Europäischen Patentamt gegen das erteilte europäische Patent Einspruch einlegen. Der Einspruch ist schriftlich einzureichen und zu begründen. Er gilt erst als eingelegt, wenn die Einspruchsgebühr entrichtet worden ist (Art. 99(1) Europäisches Patentübereinkommen).

## Beschreibung

Die Erfindung bezieht sich auf ein Verfahren zur Herstellung eines flexiblen, selbstklebenden Fußbodenbelages, inbesondere für Flugzeuge, mit einer flexiblen Bahn aus einem flammwidrig eingestellten Polysiloxan und einer auf einer Seite mit einer selbstklebenden Schicht beschichteten Trägerbahn sowie auf einen entsprechenden Fußbodenbelag und eine Vorrichtung zur Durchführung des Verfahrens.

Aus der DE-A-33 04 232 ist ein Fußbodenbelag für Flugzeuge bekannt, bei dem auf eine steife Platte aus einem faserverstärkten Laminat auf Phenolharzbasis eine Schicht aus einem flammwidrig eingestellten Polysiloxan aufvulkanisiert wird. Derartige, nicht textile Fußbodenbeläge werden im allgemeinen im Cockpit und in den Naßbereichen, d.h. in den Toiletten und den Bordküchen von Flugzeugen, verlegt, wobei zum Überbrücken der Sitzschienen und zum Schutz des Fußbodenbelages gegen ein Durchschlagen bei hohen punktuellen Belastungen der Belag eine feste Unterplatte aufweisen muß.

In Flugzeugbereichen mit einem glatten, geschlossenen Boden, d.h. ohne Lücken und Unterbrechungen durch Sitzschienen oder andere Öffnungen, ist jedoch eine starre Unterplatte nicht erforderlich, sondern es kann dort direkt der Polysiloxanbodenbelag verlegt werden.

Für eine glatte, faltenfreie Verlegung, die auch gegebenenfalls wieder gelöst werden kann, ergeben sich jedoch erhebliche Schwierigkeiten, da Polysiloxan wegen seiner extrem glatten Oberfläche nur sehr schwer verklebt und insbesondere nicht mit Doppelklebebändern, wie sie sonst bei der Verlegung von Bodenbelägen üblich sind, befestigt werden kann.

Eine solche selbstklebende Beschichtung ist dabei aus der EP-A-0 104 305 bekannt, die hierbei jedoch bei einer herkömmlichen Teppichware angewendet wird.

Der vorliegenden Erfindung liegt demgegenüber die Aufgabe zugrunde, ein Vefahren anzugeben, wie dennoch ein derartiges Polysiloxan auf einfache Weise selbstklebend ausgerüstet werden kann, so daß dadurch eine einfache Verlegung ermöglicht wird. Darüberhinaus soll dieser Belag aber auch gleichzeitig im Brandfall wenig Rauch und wenig toxische Gase entwickeln.

Zur Lösung dieser Aufgabe ist erfindungsgemäß vorgesehen, daß auf die obere, unbeschichtete Seite der Trägerbahn eine Schicht aus einem im Rohzustand zähflüssigen Polysiloxan als Kleber aufgebracht und anschließend die Polysiloxanbahn unter Anpressung bei Raumtemperatur aufgeklebt wird.

Da zähflüssiges Polysiloxan im Rohzustand eine besondere Affinität zu ausvulkanisiertem Polysiloxan aufweist und mit diesem bei Raumtemperatur vernetzt, ist es besonders als Kleber für solche Bahnen geeignet und schafft damit die Möglichkeit, auch eine Polysiloxanbahn selbstklebend auszurüsten, um sie dann einfach verlegen zu können.

Als Trägerbahn kann dabei eine Polyesterfolie, zweckmäßigerweise aus Polyäthylen- oder Polybuthylen-Terephthalat, verwendet werden.

Es ist aber auch möglich, als Trägerbahn ein Papier auf Phenolharzbasis zu verwenden oder aber auch eine Aluminiumfolie mit einer Dicke von etwa 0,1 mm.

Als selbstklebende Beschichtung für die Trägerbahn kann eine Kleberschicht auf Acrylat- oder Polyisobuthylenbasis verwendet werden, wobei diese selbstklebende Beschichtung dann zweckmäßigerweise noch mit einem Schutzpapier abgedeckt wird.

Darüberhinaus bezieht sich die Erfindung auf einen selbstklebenden, flexiblen Fußbodenbelag mit einer flexiblen Bahn aus einem flammwidrig eingestellten Polysiloxan, bei dem erfindungsgemäß die auf ihrer Unterseite selbstklebend beschichtete Trägerbahn mittels eines bei Raumtemperatur aufgebrachten und vernetzenden Polysiloxans als Kleber auf die Polysiloxanbahn aufgeklebt ist.

Diese Trägerbahn kann aus einer Polyesterfolie bestehen, die mit Glasfasern verstärkt und flammwidrig ausgerüstet sein kann.

Ferner kann die Trägerbahn aber auch aus einem Phenolharzpapier bestehen, das selbst flammwidrig ist oder aber auch aus einer dünnen Aluminiumfolie. Schließlich ist es auch möglich, ein mit Aluminium bedampftes Phenolharzpapier oder -gewebe zu verwenden.

Die Erfindung bezieht sich auf eine Vorrichtung zur Durchführung des eingangs genannten Verfahrens, wonach erfindungsgemäß oberhalb einer starren Unterplatte mit Fixiervorrichtungen für die selbstklebend beschichtete Trägerbahn eine Auftrag- und Anpreßvorrichtung entlang der Trägerbahn verfahrbar angeordnet ist.

Dabei kann die Kleberauftrag- und Anpreßvorrichtung eine Ablaufstation für die Polysiloxanbahn, Umlenkrollen und zwei dicht oberhalb der Trägerbahn angeordnete Anpreßwalzen sowie in Verfahrrichtung vor den Anpreßwalzen einen Kleberrakel mit einer Kleberzuführung aufweisen.

Anhand einer schematischen Zeichnung sind Aufbau und Funktionsweise von Ausführungsbeispielen nach der Erfindung näher erläutert. Dabei zeigen

Fig. 1 einen Längsschnitt durch einen Fußbodenbelag in stark vergrößertem Maßstab mit dem Schichtaufbau und

Fig. 2 die Seitenansicht einer nur schematisch dargestellten Kleberauftrag- und Anpreßvorrichtung.

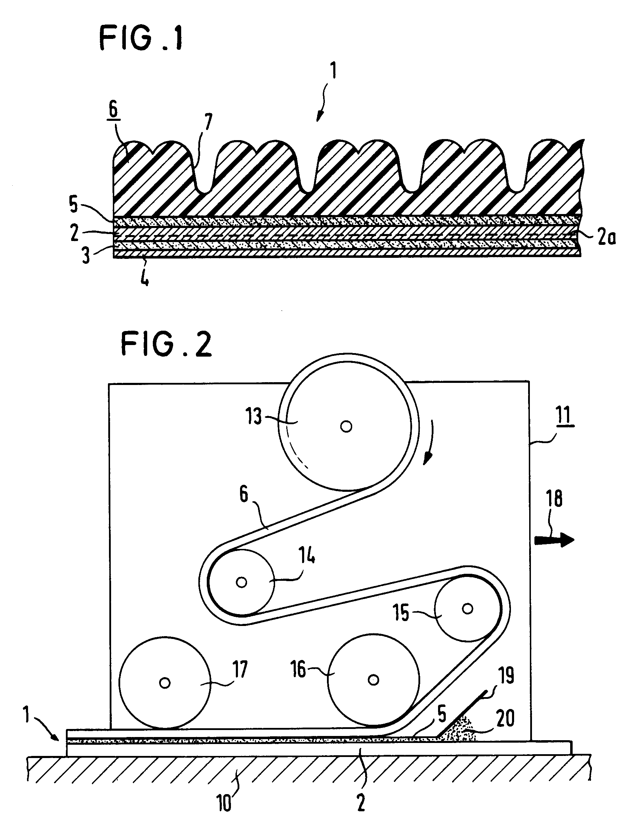

Der in Fig. 1 im Längsschnitt dargestellte Fußbodenbelag 1, der in den Naßbereichen und im Cockpit eines Flugzeuges verlegt werden soll, weist zunächst eine untere Trägerbahn 2 auf, die mit einer selbstklebenden Beschichtung 3 versehen und mit einem silikonisierten Schutzpapier 4 abgedeckt ist. Die Trägerbahn 2 kann dabei aus einer Polyesterfolie von etwa 0,05 bis 0,15 mm bestehen, die zweckmäßigerweise mit Glasfasern verstärkt und flammwidrig ausgerüstet ist.

Eine andere Möglichkeit besteht darin, daß die Trägerbahn 2 aus einem Phenolharzpapier in einer Stärke von 0,1 bis 0,5 mm besteht, das selbst flammwidrig bzw. nicht brennbar ist.

Ferner ist es auch möglich, als Trägerbahn eine dünne Aluminiumfolie von etwa 0,1 mm Dicke zu verwenden, die noch hinreichend flexibel ist.

Als Trägerbahn 2 kann aber auch ein mit Aluminium 2a bedampftes Phenolharzpapier oder -gewebe verwendet werden.

Diese Aluminiumbedampfung dient zur Stabilisierung des Papiers bzw. des Gewebes und bewirkt darüber hinaus eine sehr gute Haftung der selbstklebenden Schicht 3.

Diese selbstklebende Schicht 3 kann aus einem Acrylat oder Polyisobuthylen bestehen, die zweckmäßigerweise flammwidrig ausgerüstet ist.

Auf die Oberseite der Trägerbahn 2 wird nunmehr ein Kleber 5 auf Basis eines im Rohzustand zähflüssigen Polysiloxans mit einer Schichtdicke von 0,1 bis 0,2 mm aufgetragen. Anschließend wird eine Bahn 6 aus einem flammwidrigen Polysiloxan aufgelegt und aufgepreßt, so daß eine gute Verklebung erreicht wird. Zweckmäßigerweise wird dabei ein Polysiloxan verwendet, wie es in der Europäischen Patentanmeldung 0051212 beschrieben ist. Dieses flammwidrige Polysiloxan besteht aus einem Diorganopolysiloxan, fein verteilter Kieselsäure und/oder anderen Füllstoffen, fein zerteiltem Titandioxid, Platin, einem Härtungsmittel sowie einer Stickstoffverbindung.

Die Oberfläche dieser Polysiloxanbahn 6 ist dann noch mit einer Struktur 7 versehen, die in Form von Wölbungen oder Rillen oder als imitierte Kordelung mit parallelen Rillen ausgebildet sein kann. Besonders zweckmäßig ist dabei eine rillenförmige Profilierung, damit Flüssigkeiten nur in einer bestimmten Richtung abfließen können und dadurch außerdem verhindert wird, daß sich verschüttete Flüssigkeiten stark ausbreiten.

Die Dicke dieser Polysiloxanbahn 6 beträgt etwa 2 mm und an der tiefsten Stelle der Kordelstruktur 7 etwa 0,3 bis 0,5 mm.

Fig. 2 zeigt eine Vorrichtung zur Herstellung eines Fußbodenbelages nach Fig. 1. Dabei ist oberhalb einer starren Unterplatte 10 eine Kleberauftrag- und Anpreßvorrichtung 11 verfahrbar angeordnet. Auf der starren Unterplatte 10 wird nunmehr zunächst die selbstklebend beschichtete und zunächst abgedeckte Trägerbahn 2 aufgelegt und mit nicht näher dargestellten Arretierungsmitteln in seiner Lage fixiert. Die Kleberauftrag- und Anpreßvorrichtung 11 weist eine Ablaufstation 13 für die Polysiloxanbahn 6 sowie zwei nachgeschaltete Umlenkrollen 14 und 15 sowie zwei dicht über der Trägerbahn 2 gelagerte Anpreßwalzen 16 und 17 auf. Vor der in Verfahrrichtung 18 vorderen Anpreßwalze 16 ist ein Kleberrakel 19 für den Polysiloxankleber 20 und eine nicht näher dargestellte Kleberzuführungsvorrichtung vorgesehen.

Nach Auflegen der Trägerbahn 2 verfährt die Kleberauftrag- und Anpreßvorrichtung 11 mittels eines elektrischen Antriebes in Pfeilrichtung 18, bringt dabei über den Kleberrakel 19 eine gleichmäßig dünne Schicht 5 des Polysiloxanklebers 20 auf die Trägerbahn 2 auf und preßt dann die von der Ablaufstation 13 ablaufende Polysiloxanbahn 6 fortlaufend mittels der Anpreßwalzen 16 und 17 auf die Trägerbahn 2.

Nach dem Verkleben und Aufpressen benötigt der so hergestellte Fußbodenbelag noch mindestens 24 bis 48 h, um bei Raumtemperatur und einer genügend hohen Luftfeuchtigkeit vollständig auszureagieren und zu vernetzen. Der Kleber 5 reagiert dabei unter Abspaltung geringer Mengen an Essigsäure mit der Luftfeuchtigkeit, bevor er fest wird und eine dauerhafte Verbindung herstellt.

Das Gewicht des so hergestellten flexiblen Fußbodenbelages beträgt etwa 1.800 bis 2.000 $g/m^2$ und läßt sich aufgrund der integrierten selbstklebenden Schicht sehr leicht verlegen und bietet dort einen dauerhaften, flammfesten Belag, der auch hohen Belastungen sicher standhält.

**Patentansprüche**

1. Verfahren zur Herstellung eines flexiblen, selbstklebenden Fußbodenbelages, insbesondere für Flugzeuge, mit einer flexiblen Bahn aus einem flammwidrig eingestellten Polysiloxan und einer auf einer Seite mit einer selbstklebenden Schicht beschichteten Trägerbahn, bei dem auf die obere, unbeschichtete Seite der Trägerbahn eine Schicht aus einem im Rohzustand zähflüssigen Polysiloxan als Kleber aufgebracht und anschließend die Polysiloxanbahn unter Anpressung bei Raumtemperatur aufgeklebt wird.

2. Verfahren nach Anspruch 1, dadurch gekennzeichnet, daß als Trägerbahn eine Polyesterfolie verwendet wird.

3. Verfahren nach Anspruch 2, dadurch gekennzeichnet, daß die Polyesterfolie aus Polyäthylen- oder Polybuthylen-Terephthalat besteht.

4. Verfahren nach Anspruch 1, dadurch gekennzeichnet, daß als Trägerbahn ein Papier auf Phenolharzbasis verwendet wird.

5. Verfahren nach Anspruch 1, dadurch gekennzeichnet, daß als Trägerschicht eine Aluminiumfolie mit einer Dicke von etwa 0,1 mm verwendet wird.

6. Verfahren nach Anspruch 1, dadurch gekennzeichnet, daß als selbstklebende Beschichtung für die Trägerbahn eine Kleberschicht auf Acrylat- oder Polyisobuthylenbasis verwendet wird.

7. Verfahren nach Anspruch 6, dadurch gekennzeichnet, daß die selbstklebende Beschichtung mit einem Schutzpapier abgedeckt wird.

8. Verfahren nach Anspruch 1, dadurch gekennzeichnet, daß der verpreßte Fußbodenbelag über einen Zeitraum von 24 bis 48 h bei Raumtemperatur und erhöhter Luftfeuchtigkeit einer vollständigen Vernetzung unterzogen wird.

9. Selbstklebender, flexibler Fußbodenbelag, hergestellt nach dem Verfahren nach Anspruch 1, dadurch gekennzeichnet, daß die auf ihrer Unterseite selbstklebend beschichtete Trägerbahn (2) mittels eines bei Raumtemperatur aufgebrachten und vernetzenden Polysiloxans als Kleber (5) auf die Polysiloxanbahn (6) aufgeklebt ist.

10. Selbstklebender Fußbodenbelag nach Anspruch 9, dadurch gekennzeichnet, daß die Trägerbahn (2) aus einer Polyesterfolie besteht.

11. Selbstklebender Fußbodenbelag nach Anspruch 10, dadurch gekennzeichnet, daß die Polyesterfolie (2) mit Glasfasern verstärkt ist.

12. Selbstklebender Fußbodenbleag nach Anspruch 10 oder 11, dadurch gekennzeichnet, daß die Polyesterfolie (2) flammwidrig ausgerüstet ist.

13. Selbstklebender Fußbodenbelag nach Anspruch 9, dadurch gekennzeichnet, daß die Trägerbahn (2) aus einem Phenolharzpapier besteht.

14. Selbstklebender Fußbodenbelag nach Anspruch 9, dadurch gekennzeichnet, daß die Trägerbahn (2) aus einer Aluminiumfolie mit einer Dicke von etwa 0,1 mm besteht.

15. Selbstklebender Fußbodenbelag nach Anspruch 9, dadurch gekennzeichnet, daß die Trägerbahn (2) aus einem mit Aluminium bedampften Phenolharzpapier oder -gewebe besteht.

16. Vorrichtung zur Durchführung des Verfahrens nach Anspruch 1, dadurch gekennzeichnet, daß oberhalb einer starren Unterplatte (10) mit Fixiervorrichtungen für die selbstklebend beschichtete Trägerbahn (2) eine Kleberauftrag- und Anpreßvorrichtung (11) entlang der Trägerbahn (2) verfahrbar angeordnet ist.

17. Vorrichtung nach Anspruch 16, dadurch gekennzeichnet, daß die Kleberauftrag- und Anpreßvorrichtung (11) eine Ablaufstation (13) für die Polysiloxanbahn (6), Umlenkrollen (14, 15) und zwei dicht oberhalb der Trägerbahn (2) angeordnete Anpreßwalzen (16, 17) sowie in Verfahrrichtung (18) vor den Anpreßwalzen (16, 17) einen Kleberrakel (19) für den Kleber (20) aufweist.

## Claims

1. Process for manufacturing a flexible, self-adhesive floor covering, in particular for aircraft, having a flexible web of a standard flame-resistant polysiloxane and a backing web coated on one side with a self-adhesive layer, wherein a layer of a polysiloxane, which is viscous in its crude state, is applied as an adhesive onto the top uncoated side of the backing web and then the polysiloxane web is glued on under contact pressure at room temperature.

2. Process according to claim 1, characterized in that a polyester film is used as a backing web.

3. Process according to claim 2, characterized in that the polyester film comprises polyethylene- or polybutyleneterephthalate.

4. Process according to claim 1, characterized in that a phenolic resin-based paper is used as a backing web.

5. Process according to claim 1, characterized in that an approximately 0.1 mm thick aluminium foil is used as a backing layer.

4

6. Process according to claim 1, characterized in that a layer of an acrylate- or polyisobutylene-based adhesive is used as a self-adhesive coating for the backing web.

7. Process according to claim 6, characterized in that the self-adhesive coating is covered by a release paper.

8. Process according to claim 1, characterized in that the pressed floor covering is subjected to full curing for a period of 24 to 48 hours at room temperature and increased atmospheric humidity.

9. Self-adhesive flexible floor covering, manufactured using the process according to claim 1, characterized in that the backing web (2) having a self-adhesive coating on its underside is glued onto the polysiloxane web (6) using, as an adhesive, a polysiloxane which is applied and cures at room temperature.

10. Self-adhesive floor covering according to claim 9, characterized in that the backing web (2) comprises a polyester film.

11. Self-adhesive floor covering according to claim 10, characterized in that the polyester film (2) is reinforced with glass fibres.

12. Self-adhesive floor covering according to claim 10 or 11, characterized in that the polyester film (2) is given a flame-resistant finish.

13. Self-adhesive floor covering according to claim 9, characterized in that the backing web (2) comprises a phenolic resin paper.

14. Self-adhesive floor covering according to claim 9, characterized in that the backing web (2) comprises an approximately 0.1 mm thick aluminium foil.

15. Self-adhesive floor covering according to claim 9, characterized in that the backing web (2) comprises an aluminized phenolic resin paper or web.

16. Device for effecting the process according to claim 1, characterized in that there is, above a rigid base (10) with fixing devices for the self-adhesively coated backing web (2), an adhesive-applying and contact pressure device (11) disposed so as to be displaceable along the backing web (2).

17. Device according to claim 16, characterized in that the adhesive-applying and contact pressure device (11) has a delivery station (13) for the polysiloxane web (6), deflection rollers (14, 15), two contact pressure rollers (16, 17) disposed closely above the backing web (2), as well as an adhesive doctor blade (19) for the adhesive (20) disposed, in displacement direction (18), in front of the contact pressure rollers (16, 17).

**Revendications**

1. Procédé de fabrication d'un revêtement de sol souple et auto-adhésif, notamment pour des avions, comprenant une bande souple en un polysiloxane ignifugé et en une bandesupport revêtue, sur une face, d'une couche auto-adhésive qui consiste à déposer, en tant qu'adhésif, sur la face supérieure non revêtue de la bande-support, une couche en un polysiloxane visqueux à l'état brut, et ensuite à coller la bande de polysiloxane par une pression d'application à la température ambiante.

2. Procédé suivant la revendication 1, caractérisé en ce qu'il consiste à utiliser, comme bande-support, une feuille de polyester.

3. Procédé suivant la revendication 2, caractérisé en ce que la feuille de polyester est en poly-(téréphtalate d'éthylène) ou en poly-(téréphtalate de butylène).

4. Procédé suivant la revendication 1, caractérisé en ce qu'il con siste à utiliser, comme bande-support, un papier à base de résine phénolique.

5. Procédé suivant la revendication 1, caractérisé en ce qu'il consiste à utiliser, comme couche-support, une feuille d'aluminium d'une épaisseur de 0,1 mm environ.

6. Procédé suivant la revendication 1, caractérisé en ce qu'il consiste à utiliser, comme revêtement autoadhésif pour la bande-support, une couche de produit adhésif à base d'acrylate ou de polyisobutylène.

7. Procédé suivant la revendication 6, caractérisé en ce qu'il consiste à recouvrir le revêtement auto-adhésif d'un papier de protection.

8. Procédé suivant la revendication 1, caractérisé en de qù'il consiste à soumettre le revêtement de sol comprimé à une réticulation complète, pendant une durée de 24 à 48 heures, à la température ambiante et sous une grande hygrométrie.

9. Revêtement de sol souple et auto-adhésif, fabriqué par le procédé suivant la revendication 1, caractérisé en ce que la bande-support (2), revêtue d'une manière auto-adhésive sur sa face inférieure, est collée sur la bande de polysiloxane (6) au moyen d'un polysiloxane servant de produit adhésif (5) déposé et réticulé à la température ambiante.

10. Revêtement de sol auto-adhésif suivant la revendication 9, caractérisé en ce que la bande-support (2) est constituée d'une feuille de polyester.

11. Revêtement de sol auto-adhésif suivant la revendication 10, caractérisé en ce que la feuille de polyester (2) est renforcée de fibres de verre.

12. Revêtement de sol auto-adhésif suivant la revendication 10 ou 11, caractérisé en ce que la feuille de polyester (2) est ignifugée.

13. Revêtement de sol auto-adhésif suivant la revendication 9, caractérisé en ce que la bande-support (2) est constituée d'un papier à base de résine phénolique.

14. Revêtement de sol auto-adhésif suivant la revendication 9, caractérisé en ce que la bande-support (2) est constituée d'une feuille d'aluminium d'une épaisseur de 0,1 mm environ.

15. Revêtement de sol auto-adhésif suivant la revendication 9, caractérisé en ce que la bande-support (2) est constituée d'un papier ou d'un tissu de résine phénolique revêtue d'aluminium par dépôt en phase vapeur.

16. Dispositif pour la mise en oeuvre du procédé suivant la revendication 1, caractérisé en ce qu'au-dessus d'une plaque inférieur (10) rigide ayant des dispositifs de fixation de la bande-support (2) revêtue de manière autoadhésive, est monté mobile, le long de la bande-support (2), un dispositif de dépôt et d'application par pression (11) d'un produit adhésif.

17. Dispositif suivant la revendication 16, caractérisé en ce que le dispositif de dépôt et d'application par pression (11) d'un produit adhésif comporte un poste de déroulement (13) de la bande de polysiloxane (6), des rouleaux de renvoi (14, 15) et deux cylindres d'application d'une pression (16, 17) disposés juste au-dessus de la bandesupport (2), ainsi que, en amont, dans le sens de déplacement (18), des cylindres d'application d'une pression (16, 17), une racle (19) pour le produit adhésif (20).

FIG .1

FIG .2